(19) Europäisches Patentamt / European Patent Office / Office européen des brevets

(11) **EP 2 627 191 B1**

(12) **EUROPEAN PATENT SPECIFICATION**

(45) Date of publication and mention
of the grant of the patent:
**30.07.2014 Bulletin 2014/31**

(21) Application number: **11741236.1**

(22) Date of filing: **10.08.2011**

(51) Int Cl.:
***A23F 3/12*** *(2006.01)*

(86) International application number:
**PCT/EP2011/063747**

(87) International publication number:
**WO 2012/048925 (19.04.2012 Gazette 2012/16)**

(54) **PROCESS FOR MANUFACTURING GREEN TEA**

VERFAHREN ZUR HERSTELLUNG VON GRÜNEM TEE

PROCEDE DE FABRICATION DE THE VERT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.10.2010 EP 10187233**

(43) Date of publication of application:
**21.08.2013 Bulletin 2013/34**

(73) Proprietors:
• **Unilever PLC
London EC4Y 0DN (GB)**
Designated Contracting States:
**CY GB IE MT**
• **Unilever N.V.
3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**

(72) Inventors:
• **COLLIVER, Steven, Peter
Bedford Bedfordshire MK44 1LQ (GB)**
• **DOWNIE, Andrew, Lee
Bedford Bedfordshire MK44 1LQ (GB)**
• **MUTAI, Felix, Kipkorir
Kericho 20200 (KE)**
• **SHARP, David, George
Bedford Bedfordshire MK44 1LQ (GB)**

(74) Representative: **Askew, Sarah Elizabeth
Unilever Patent Group
Colworth House
Sharnbrook
Bedford MK44 1LQ (GB)**

(56) References cited:
**WO-A2-2008/012280**

• **DATABASE WPI Week 198850 Thomson
Scientific, London, GB; AN 1988-359317
XP002629228, & SU 1 400 589 A (DZNELADZE Z
YU) 7 June 1988 (1988-06-07) cited in the
application**
• **DATABASE WPI Week 201024 Thomson
Scientific, London, GB; AN 2010-A38852
XP002629229, & KR 2009 130 988 A (BOOK H J)
28 December 2009 (2009-12-28)**

## Description

### TECHNICAL FIELD OF THE INVENTION

The present invention relates to a process for manufacturing green leaf tea products. More particularly the present invention relates to green leaf tea products obtained from fresh tea leaves which are comminuted whilst comprising active endogenous enzymes.

### BACKGROUND TO THE INVENTION

Beverages based on the tea plant (*Camellia sinensis*) have been popular throughout the world for many hundreds of years. Traditionally such beverages are produced by infusing leaf tea in hot water.

Most of the tea consumed in the Western World is so-called black tea which is obtained by harvesting leaves of the plant *Camellia sinensis* and withering, rolling, enzymatically oxidizing (fermenting), firing and sorting them. However the leaves can be processed without the fermentation step to produce what is known as green tea. Such tea is widely consumed in parts of the People's Republic of China, Japan, North Africa and the Middle East. In another variation oolong tea is prepared by partial fermentation.

Tea leaves contain a large number of enzymes, biochemical intermediates and structural elements normally associated with plant growth and photosynthesis together with substances that are responsible for the characteristics of tea itself. These include flavanols, flavanol glycosides, polyphenolic acids, caffeine, amino acids, mono- and polysaccharides, proteins, cellulose, lipids, chlorophylls and volatiles. The amino acid theanine is unique to tea in the plant kingdom and has been associated with several benefits including enhancing mental performance.

Flavanols or more specifically flavan-3-ols tend to constitute up to 30% of the dry weight of freshly picked tea leaves and are known as catechins. Green tea retains most of the catechins, but their content in black tea is greatly reduced due to both chemical and enzymatic oxidations taking place during fermentation to give theaflavins and thearubigins. In conventional green tea manufacture a thermal treatment (e.g. steaming or pan firing) is used to deactivate the endogenous enzymes and thereby prevent fermentation during subsequent shaping and comminution steps.

Sovient Patent application published as SU 1 400 589 A1 (Dzneladze et al) discloses a green tea production method which involves cutting leaves in lengthwise and transverse directions prior to treatment with superheated steam and drying. According to this method the processing of the leaves up to the fixing stage eliminates any damage to the leaves.

We have now found that by comminuting fresh tea leaves sufficient to cause substantial bruising to the leaves under aerobic conditions and before the enzyme deactivation step results in green leaf tea products which produce infusions with an unexpectedly mild taste and reduced levels of organic acids, such as gallic acid and quinic acid (which are associated with some off-tastes such as metallic tastes) whilst still having a substantial amount of the beneficial amino acid theanine.

### TESTS AND DEFINITIONS

Tea

"Tea" for the purposes of the present invention means material from *Camellia sinensis* var. *sinensis* and/or *Camellia sinensis* var. *assamica.*

"Leaf tea" for the purposes of this invention means a tea product that contains tea leaves and/or stem in an uninfused form, and that has been dried to a moisture content of less than 30% by weight, and usually has a water content in the range 1 to 10% by weight (i.e. "made tea").

"Green tea" refers to substantially unfermented tea. Green tea comprises polyphenols, wherein the polyphenols comprise catechins in an amount of at least 60% by weight of the polyphenols, preferably at least 70%, most preferably from 80-100%. "Green tea" also includes the so-called "white teas".

"Fermentation" refers to the oxidative and hydrolytic process that tea undergoes when certain endogenous enzymes and substrates are brought together, e.g., by mechanical disruption of the cells by maceration of the leaves. During this process colourless catechins in the leaves are converted to a complex mixture of yellow and orange to dark brown polyphenolic substances.

"Fresh tea leaves" refers to tea leaves and/or stem that have never been dried to a water content of less than 30% by weight, and usually have a water content in the range 60 to 90%.

Total Polyphenols

The total polyphenol content of a sample is determined using the Folin-Ciocalteu method as detailed in the International Standard published by the International Organization for Standardization as ISO 14502-1:2005(E).

Catechins

As used herein the term "catechins" is used as a generic term for catechin, gallocatechin, catechin gallate, gallocatechin gallate, epicatechin, epigallocatechin, epicatechin gallate, epigallocatechin gallate, and mixtures thereof.

Aerobic Conditions

Where tea leaves are said to undergo a process under "aerobic conditions" this means that the tea leaves are in contact with an atmosphere comprising gaseous oxygen. Preferably the atmosphere comprises at least 10% v/v oxygen, more preferably from 15 to 100% v/v oxygen. Conveniently the atmosphere is air.

Steaming

The term "steaming" as used herein means contacting fresh tea leaves with steam at a temperature of 100 °C or more for a period of 1 minute or more thereby to deactivate the endogenous fermentation enzymes.

Pan Firing

The term "pan firing" as used herein means contacting fresh tea leaves with a hot surface which is at a temperature greater than 200 °C for a period of 5 minutes or more thereby to deactivate the endogenous fermentation enzymes.

Tray Drying

The term "tray drying" as used herein means spreading fresh tea leaves on a metal surface and then heating (preferably with hot air) to a temperature greater than 70°C but less than 150 °C to reduce the moisture content of the tea leaves.

CTC

"CTC" comes from the words "crush, tear and curl". CTC machines and processes are well-known to those skilled in black tea manufacture (see, for example, "Tea: Cultivation to Consumption", K.C. Willson and M.N. Clifford (Eds), 1st Edn, 1992, Chapman & Hall (London), Chapter 14, pp. 483-485). Where reference is made to at least one CTC process or machine, this means at least one pass through a pair of CTC rollers.

Leaf Particle Size

For the purposes of the present invention, leaf particle size is characterised by sieve mesh size using the following convention:

- Tyler mesh sizes are used throughout.
- A "+" before the sieve mesh indicates the particles are retained by the sieve.
- A "-" before the sieve mesh indicates the particles pass through the sieve.

For example, if the particle size is described as -5 +20 mesh, then the particles will pass through a 5 mesh sieve (particles smaller than 4.0 mm) and be retained by a 20 mesh sieve (particles larger than 841 $\mu$m). For determining particle size, the leaves are preferably dried prior to sieving.

Miscellaneous

Except in the examples, or where otherwise explicitly indicated, all numbers in this description indicating amounts of material or conditions of reaction, physical properties of materials and/or use may optionally be understood as modified by the word "about".

All amounts are by weight of the final composition, unless otherwise specified.

It should be noted that in specifying any range of concentration or amount, any particular upper concentration can be associated with any particular lower concentration or amount.

For the avoidance of doubt, the word "comprising" is intended to mean "including" but not necessarily "consisting of" or "composed of". In other words, the listed steps or options need not be exhaustive.

The disclosure of the invention as found herein is to be considered to cover all embodiments as found in the claims as being multiply dependent upon each other irrespective of the fact that claims may be found without multiple dependency or redundancy.

## SUMMARY OF THE INVENTION

In a first aspect, the present invention provides a process for manufacturing a green leaf tea product, the process comprising the steps of:

a) providing fresh tea leaves comprising catechins and active endogenous enzymes;
b) optionally withering the fresh tea leaves;
c) comminuting the fresh tea leaves comprising active endogenous enzymes under aerobic conditions sufficient to cause substantial bruising to the leaves and so that at least 50% of the comminuted fresh tea leaves have a particle size such that they will pass through a 5 mesh sieve and be retained by a 20 mesh sieve;
d) inactivating the endogenous enzymes in the comminuted fresh tea leaves to substantially prevent fermentation of the fresh leaves; and
e) drying the comminuted fresh tea leaves to yield the green leaf tea product.

This process is found to yield green tea products which give infusions with relatively mild taste. In addition the process may allow for relatively simple and low-energy production of green tea as no separate enzyme deactivation step (such as steaming or pan firing) is necessary as enzymes can be deactivated by dying.

Bruising of the leaves is conveniently brought about by use of a CTC process and so in an especially preferred embodiment the process comprises the steps of :

a) providing fresh tea leaves comprising catechins and active endogenous enzymes;
b) optionally withering the fresh tea leaves;
c) comminuting the fresh tea leaves comprising active endogenous enzymes under aerobic conditions, wherein the comminution comprises passing the fresh leaves through a CTC machine;
d) inactivating the endogenous enzymes in the comminuted fresh tea leaves to substantially prevent fermentation of the fresh leaves; and
e) drying the comminuted fresh tea leaves to yield the green leaf tea product.

In a second aspect, the present invention provides a leaf tea product obtained and/or obtainable by the process. Such a leaf tea has the high catechin content of conventional green teas but has modified infusion properties afforded by the process such that it produces infusions which are low in organic acids, such as gallic acid and quinic acid, have an unexpectedly mild taste and which have substantial amounts of theanine.

## DETAILED DESCRIPTION

Fresh tea leaves are employed in the process of the present invention. In one embodiment the fresh leaves are comminuted without withering. However it is possible to wither the leaves prior to comminution to allow development of certain desirable flavours and/or aromas. If the leaves are withered, it is preferred that the fresh tea leaves are withered to a moisture content of less than 75% by weight, more preferably to a moisture content in the range of 63 to 73 wt%. However we have found that withering prior to comminution somewhat diminishes the effect of comminuting whilst the enzymes are still active. Therefore it is preferred that the leaves are not withered prior to comminution. In particular it is preferred that the leaves are not withered and so have a moisture content of at least 75 wt% when comminuted, more preferably from 76 to 80 wt%.

Comminution of the fresh tea leaves occurs under aerobic conditions as this appears to allow limited fermentation-like reactions to occur in the tea leaves leading to a mild flavour in tea beverage prepared from the final leaf tea. It is preferred that the leaves are comminuted to significantly reduce the leaf particle size. In particular at least 50 wt% of the comminuted fresh tea leaves have a particle size of -5 mesh, preferably at least 70 wt% and most preferably from 90 to 100 wt%. The comminution is preferably not such as to reduce the leaf particle size excessively as then fermentation may be accelerated in the leaves. Thus at least 50 wt% of the comminuted fresh tea leaves have a particle size of +20 mesh, preferably at least 70 wt% and most preferably from 90 to 100 wt%.

To allow the fermentation-like reactions to occur it is necessary that the fresh leaves comprise active endogenous enzymes, such as oxidases, peroxidises or a combination thereof, during comminution. Thus there is no enzyme deactivation step (such as steaming or pan firing) prior to or during the comminution step.

The comminution is relatively severe and results in significant disruption of the leaves as evidenced by bruising of the leaves. Such damage may be suitably achieved by passing the fresh tea leaves through at least one CTC process.

To ensure that the final product is a green tea, the fermentation-like reactions must not be allowed to destroy the majority of the catechins, otherwise the final product would not have green-tea character.

The degree of fermentation is conveniently judged by the proportion of oxidised catechins. In particular, one can measure a quantity, $C_0$, which is the amount of catechins in the fresh tea leaves prior to comminution in percent by dry weight of the fresh leaves. One can then measure a second quantity, $C_F$, which is the amount of catechins in the comminuted fresh tea leaves after the enzyme deactivation step in percent by dry weight of the comminuted leaves. One can then use these values to calculate the degree of fermentation, R, as the content of catechins in the leaves after inactivation as a percentage of the content of catechins in the fresh tea leaves prior to comminution on a dry weight basis. In other words, the degree of fermentation can be calculated as follows:

$$R(\%) = 100C_F/C_0,$$

such that for negligible fermentation R =100% and for complete fermentation R = 0%.

Methods for determining the catechin content of tea leaves are well known in the art and one such method is given in the international patent application published as WO 2009/059927 (Unilever).

For the purposes of the present invention the fermentation is arrested by enzyme inactivation to substantially prevent fermentation. Preferably the enzyme deactivation occurs to prevent the content of catechins in the fresh tea leaves falling below 60% of the content of catechins of the fresh tea leaves prior to comminution on a dry weight basis, i.e. before R falls below 60%. More preferably the endogenous enzymes in the comminuted fresh tea leaves are inactivated to prevent the content of catechins in the fresh tea leaves falling below 70% (most preferably 80%) of the content of catechins of the fresh tea leaves prior to comminution on a dry weight basis.

However, because bruising of the leaves initiates the fermentation-like reactions, the process of the present invention typically results in some conversion of catechins. Thus it is preferred that enzyme deactivation occurs when the content of catechins in the fresh tea leaves is below 95% of the content of catechins of the fresh tea leaves prior to comminution on a dry weight basis (i.e. R is less than 95%). More preferably enzyme deactivation occurs when the content of catechins in the fresh tea leaves is below 90% of the content of catechins of the fresh tea leaves prior to comminution on a dry weight basis, most preferably below 85%.

The final leaf tea product is obtained by drying the comminuted fresh tea leaves. Conveniently the enzyme deactivation can be effected simultaneously with drying thus removing any need for a separate enzyme deactivation step such as steaming or pan firing. For example the enzyme deactivation may be achieved by tray drying and/or fluidized bed drying the comminuted fresh tea leaves to yield the green leaf tea product

The final leaf tea product may be sorted according to particle size. Preferably the final product is sorted to recover a fraction wherein at least 50 wt% of the leaf tea has a particle size wherein they will pass through a 5 mesh sieve and be retained by a 20 mesh sieve, more preferably at least 70 wt% and most preferably at least 90 wt%.

Surprisingly the leaf teas prepared by the process have a relatively high gallic acid content but nevertheless produce infusions with acceptable amounts of gallic acid and less metallic aftertaste. For example the leaf teas may have a gallic acid content of at least 0.4 mg per g of dry leaf, more preferably at least 0.5, more preferably still at least 0.6 and most preferably from 0.7 to 2.0 mg/g.

**EXAMPLES**

The present invention will be further described with reference to the following examples.

Example 1

This example demonstrates the effect of process variation on the composition of beverages made from the resulting green leaf teas.

# EP 2 627 191 B1

*Tea Sources*

Samples were prepared from a China clone of var. *sinensis,* a Yabukita clone of var. *sinensis* or with material from var. *assamica.*

*Sample Preparation*

For each tea source four samples were prepared as follows:

SAMPLE 1:

Freshly-plucked tea leaves were collected. The fresh leaves were steamed to inactivate the enzymes, comminuted in a CTC process and then fluid-bed dried to yield the green leaf tea.

SAMPLE 2:

Freshly-plucked tea leaves were collected. The fresh leaves were comminuted (without any enzyme deactivation) in a CTC process and then fluid-bed dried to yield the green leaf tea.

SAMPLE 3:

The green leaf tea was prepared in an identical manner to sample 2 except that prior to comminution, the fresh leaves were withered to a moisture content in the range 66-70 wt%.

SAMPLE 4:

Freshly-plucked tea leaves were collected and withered to a moisture content in the range 66-70 wt%. The withered leaves were then comminuted (without any enzyme deactivation) by passing them through a vegetable cutter and then tray dried. The dried leaves were then crushed to reduce particle size.

Thus Sample 1 is similar to conventional steamed green tea, Sample 4 is similar to the leaf teas produced by the process of SU 1 400 589 A1 and Samples 2 and 3 are leaf teas made according to the present invention.

*Analysis of Leaf Tea*

The composition of the leaf teas (determined by HPLC analysis of extracts obtained by exhaustive extraction with methanol) are given in the table below.

| Source | Sample No. | Amount (mg / g) by dry weight of leaf | | | | R (%) |
| --- | --- | --- | --- | --- | --- | --- |
| | | Gallic Acid | Theogallin | Caffeine | Total Catechins | |
| China Jat | 1 | 0.26 | 6.36 | 19.2 | 112 | 100 |
| China Jat | 2 | 1.10 | 5.76 | 20.9 | 90.3 | 81 |
| China Jat | 3 | 0.96 | 5.16 | 21.6 | 89.2 | 80 |
| China Jat | 4 | 0.21 | 5.54 | 21.5 | 113 | 101 |
| Yabukita | 1 | 0.12 | 2.90 | 18.6 | 104 | 100 |
| Yabukita | 2 | 0.89 | 2.03 | 19.3 | 84.3 | 81 |
| Yabukita | 3 | 0.73 | 1.81 | 20.1 | 83.1 | 80 |
| Yabukita | 4 | 0.19 | 2.65 | 21.1 | 107 | 103 |
| Assamica | 1 | 0.28 | 10.7 | 29.5 | 136 | 100 |
| Assamica | 2 | 1.62 | 9.95 | 30.3 | 102 | 74 |
| Assamica | 3 | 1.47 | 9.62 | 30.9 | 92.2 | 68 |
| Assamica | 4 | 0.29 | 10.4 | 32.1 | 131 | 96 |

As can be seen from this data, the samples made by the CTC process (Samples 2 and 3) wherein some bruising occurs to the leaves whilst enzymes are still active show significant compositional differences compared to the samples wherein enzymes were deactivated prior to comminution (Sample 1). In particular they show reduced catechin levels and increased levels of gallic acid. In contrast, the composition of the samples made by comminution with minimal bruising (Sample 4) whilst enzymes are active show little difference compared with the samples where enzymes were deactivated prior to comminution (Sample 1).

*Infusions*

2 g of each leaf tea was brewed in 200 ml of freshly boiled water. The resulting infusions were diluted in 60% DMSO-$d_6$ and analysed using $^1$H NMR.

The results of the NMR analysis are summarised in the following table, wherein the numbers relate to relative molar concentration.

| Source | Sample No. | Theanine | Caffeine | Quinic acid | Gallic acid |
|---|---|---|---|---|---|
| China Jat | 1 | 1.1 | 3.9 | 2.8 | 1.4 |
| China Jat | 2 | 0.8 | 2.8 | 2.1 | 0.9 |
| China Jat | 3 | 0.9 | 3.6 | 2.5 | 1.1 |
| China Jat | 4 | 0.4 | 2.9 | 1.6 | 0.6 |
| Yabukita | 1 | 1.8 | 3.8 | 2.5 | 0.6 |
| Yabukita | 2 | 1.2 | 3.3 | 2.1 | 0.4 |
| Yabukita | 3 | 1.6 | 4.1 | 2.6 | 0.7 |
| Yabukita | 4 | 0.7 | 2.5 | 1.5 | 0.3 |
| Assamica | 1 | 2.6 | 5.1 | 3.6 | 2.7 |
| Assamica | 2 | 2.4 | 4.7 | 3.5 | 2.3 |
| Assamica | 3 | 2.2 | 5.3 | 3.2 | 2.5 |
| Assamica | 4 | 1.4 | 4.4 | 2.5 | 1.8 |

These results reveal that samples made without an enzyme deactivation step prior to comminution (Samples 2-4) generally produced infusions with significantly lower amounts of theanine, caffeine, quinic acid and gallic acid than those from Sample 1. However for samples comminuted by CTC, withering prior to comminution reduced these effects (i.e. Sample 3 was most similar to Sample 1). Unfortunately Sample 4 produced infusions with much reduced levels of the desirable amino acid theanine (i.e. delivering only around half of the theanine of infusions of Sample 1).

Example 2

This example demonstrates the sensory properties of beverages made from the leaf teas.

*Comparison with conventional green tea*

Leaf tea from a China clone of var. *sinensis* was prepared using a process identical to that for Sample 2 described in Example 1. The leaf tea was dosed into tea bags in an amount of 1.3 g per bag. A commercially available green leaf tea blend was also dosed into tea bags in an identical amount.

5 bags of each leaf tea were brewed in a litre of freshly boiled commercially-available spring water (2 min static brew, stir once, and then strain). The resulting brews were stored in vacuum flasks and then subjected to quantitative testing by a trained sensory panel.

Significant differences were found between the infusions prepared from the sample according to the invention compared with those prepared from the conventional blend. In particular the brew from the leaf tea of the present invention was found to deliver:

- less overall aroma;

- less ashtray notes;
- less bitterness and less sourness;
- less bitter and metallic aftertaste; and
- less astringency,

**Claims**

1. A process for manufacturing a green leaf tea product, the process comprising the steps of:

   a) providing fresh tea leaves comprising catechins and active endogenous enzymes;
   b) optionally withering the fresh tea leaves;
   c) comminuting the fresh tea leaves comprising active endogenous enzymes under aerobic conditions sufficient to cause substantial bruising to the leaves and so that at least 50 wt% of the comminuted fresh tea leaves have a particle size wherein they will pass through a 5 mesh sieve and be retained by a 20 mesh sieve;
   d) inactivating the endogenous enzymes in the comminuted fresh tea leaves to substantially prevent fermentation of the tea leaves; and
   e) drying the comminuted fresh tea leaves to yield the green leaf tea product.

2. The process as claimed in claim 1 wherein the enzyme deactivation step (d) prevents the content of catechins in the fresh tea leaves falling below 60% of the content of catechins of the fresh tea leaves prior to comminution on a dry weight basis.

3. The process as claimed in claim 2 wherein the enzyme deactivation occurs when the content of catechins in the fresh tea leaves is below 95% of the content of catechins of the fresh tea leaves prior to comminution on a dry weight basis.

4. The process as claimed in claim 3 wherein the enzyme deactivation occurs when the content of catechins in the fresh tea leaves is between 70 and 85% of the content of catechins of the fresh tea leaves prior to comminution on a dry weight basis.

5. The process as claimed in any one of the preceding claims wherein the comminution step comprises passing the fresh tea leaves through a CTC machine.

6. The process as claimed in any one of the preceding claims wherein the fresh leaves are not withered prior to comminution.

7. The process as claimed in any one of the preceding claims which does not comprise a step of steaming or pan firing the fresh tea leaves.

8. The process as claimed in any one of the preceding claims wherein step (d) occurs simultaneously with step (e).

9. The process as claimed in claim 8 wherein the enzyme deactivation is achieved by tray drying and/or fluidized bed drying the comminuted fresh tea leaves to yield the green leaf tea product.

10. The process as claimed in any one of the preceding claims wherein at least 70 wt% of the comminuted fresh tea leaves have a particle size of -5 mesh.

11. The process as claimed in any one of the preceding claims wherein the green leaf tea product comprises gallic acid in an amount of at least 0.4 mg/g by dry weight.

12. The process as claimed in claim 11 wherein the green leaf tea product comprises gallic acid in an amount of from 0.5 to 2.0 mg/g.

13. A green leaf tea product obtainable by the process as claimed in any one of claims 1 to 12.

**Patentansprüche**

1. Verfahren zum Herstellen eines Produktes in Form von Grünem Blatttee, wobei das Verfahren die folgenden Schritte aufweist:

   a) Bereitstellen von frischen Teeblättern, die Catechine und aktive endogene Enzyme aufweisen;
   b) gegebenenfalls Welken lassen der frischen Teeblätter;
   c) Zerkleinern der frischen Teeblätter, die aktive endogene Enzyme aufweisen, unter aeroben Bedingungen, die ausreichend sind, so dass es zu einem wesentlichen Zerquetschen der Blätter kommt und mindestens 50 Gew.-% der zerkleinerten frischen Teeblätter eine solche Teilchengröße haben, dass sie durch ein Sieb mit 5 mesh hindurchgehen und auf einem Sieb mit 20 mesh zurückgehalten werden;
   d) Inaktivieren der endogenen Enzyme in den zerkleinerten frischen Teeblättern, um eine Fermentation der Teeblätter im Wesentlichen zu verhindern; und
   e) Trocknen der zerkleinerten frischen Teeblätter, um das Produkt in Form von Grünem Blatttee zu erzielen.

2. Verfahren nach Anspruch 1,
   wobei der Schritt (d) zum Deaktivieren des Enzyms verhindert, dass der Catechingehalt in den frischen Teeblättern unter 60 % des Catechingehalts der frischen Teeblätter vor dem Zerkleinern fällt, und zwar auf das Trockengewicht bezogen.

3. Verfahren nach Anspruch 2,
   wobei das Deaktivieren des Enzyms erfolgt, wenn der Catechingehalt in den frischen Teeblättern weniger als 95 % des Catechingehalts der frischen Teeblätter vor dem Zerkleinern beträgt, und zwar auf das Trockengewicht bezogen.

4. Verfahren nach Anspruch 3,
   wobei das Deaktivieren des Enzyms erfolgt, wenn der Catechingehalt in den frischen Teeblättern 70 bis 85 % des Catechingehalts der frischen Teeblätter vor dem Zerkleinern beträgt, und zwar auf das Trockengewicht bezogen.

5. Verfahren nach einem der vorstehenden Ansprüche,
   wobei der Schritt des Zerkleinerns das Leiten der frischen Teeblätter durch eine CTC-Vorrichtung aufweist.

6. Verfahren nach einem der vorstehenden Ansprüche,
   wobei man die frischen Blätter vor dem Zerkleinern nicht welken lässt.

7. Verfahren nach einem der vorstehenden Ansprüche,
   das keinen Schritt aufweist, bei dem die frischen Teeblätter mit Dampf behandelt oder in einer Pfanne erhitzt werden.

8. Verfahren nach einem der vorstehenden Ansprüche,
   wobei der Schritt (d) gleichzeitig mit dem Schritt (e) erfolgt.

9. Verfahren nach Anspruch 8,
   wobei das Deaktivieren des Enzyms durch Trocknen in einer Schale und/oder Wirbelbetttrocknen der zerkleinerten frischen Teeblätter erreicht wird, um das Produkt in Form von Grünem Blatttee zu erhalten.

10. Verfahren nach einem der vorstehenden Ansprüche,
    wobei mindestens 70 Gew.-% der zerkleinerten frischen Teeblätter eine Teilchengröße von -5 mesh aufweisen.

11. Verfahren nach einem der vorstehenden Ansprüche,
    wobei das Produkt in Form von Grünem Blatttee Gallsäure in einer Menge von mindestens 0,4 mg/g aufweist, und zwar auf das Trockengewicht bezogen.

12. Verfahren nach Anspruch 11,
    wobei das Produkt in Form von Grünem Blatttee Gallsäure in einer Menge von 0,5 bis 2,0 mg/g aufweist.

13. Produkt in Form von Grünem Blatttee, das nach dem Verfahren nach einem der Ansprüche 1 bis 12 erhalten werden kann.

**Revendications**

1. Procédé de fabrication d'un produit de thé à feuilles vertes, le procédé comprenant les étapes de :

a) fourniture de feuilles de thé fraiches comprenant des catéchines et des enzymes endogènes actives ;
b) éventuellement blanchiment des feuilles de thé fraiches ;
c) réduction en poudre des feuilles de thé fraiches comprenant des enzymes endogènes actives dans des conditions aérobiques suffisantes pour entraîner un broyage substantiel des feuilles et de sorte qu'au moins 50 % en poids des feuilles de thé fraiches réduites en poudre aient une taille de particules leur permettant de traverser un tamis de 5 mesh et d'être retenues par un tamis de 20 mesh ;
d) inactivation des enzymes endogènes dans les feuilles de thé fraiches réduites en poudre pour substantiellement empêcher une fermentation des feuilles de thé ; et
e) séchage des feuilles de thé fraiches réduites en poudre pour donner un produit de thé à feuilles vertes.

2. Procédé selon la revendication 1, dans lequel l'étape de désactivation des enzymes (d) empêche la teneur en catéchines dans les feuilles de thé fraiches de tomber en dessous de 60 % de la teneur en catéchines des feuilles de thé fraiches avant la réduction en poudre, sur une base de poids à sec.

3. Procédé selon la revendication 2, dans lequel la désactivation des enzymes se produit lorsque la teneur en catéchines dans les feuilles de thé fraiches est inférieure à 95 % de la teneur en catéchines des feuilles de thé fraiches avant la réduction en poudre, sur une base de poids à sec.

4. Procédé selon la revendication 3, dans lequel la désactivation des enzymes se produit lorsque la teneur en catéchines dans les feuilles de thé fraiches est comprise entre 70 et 85 % de la teneur en catéchines des feuilles de thé fraiches avant la réduction en poudre, sur une base de poids à sec.

5. Procédé selon l'une quelconque des revendications précédentes, dans lequel l'étape de réduction en poudre comprend le passage des feuilles de thé fraiches dans une machine CTC.

6. Procédé selon l'une quelconque des revendications précédentes, dans lequel les feuilles fraiches ne sont pas blanchies avant la réduction en poudre.

7. Procédé selon l'une quelconque des revendications précédentes, qui ne comprend pas d'étape de séchage à la vapeur ou à la poêle des feuilles de thé fraiches.

8. Procédé selon l'une quelconque des revendications précédentes, dans lequel l'étape (d) a lieu simultanément à l'étape (e).

9. Procédé selon la revendication 8, dans lequel la désactivation des enzymes est réalisée par séchage sur plateau et/ou séchage sur lit fluidisé des feuilles de thé fraiches réduites en poudre pour donner le produit de thé à feuilles vertes.

10. Procédé selon l'une quelconque des revendications précédentes, dans lequel au moins 70 % des feuilles de thé fraiches réduites en poudre ont une taille de particule de -5 mesh.

11. Procédé selon l'une quelconque des revendications précédentes, dans lequel le produit de thé à feuilles vertes comprend de l'acide gallique en une quantité d'au moins 0,4 mg/g en poids à sec.

12. Procédé selon la revendication 11, dans lequel le produit de thé à feuilles vertes comprend de l'acide gallique en une quantité de 0,5 à 2,0 mg/g.

13. Produit de type thé à feuilles vertes susceptible d'être obtenu selon l'une quelconque des revendications 1 à 12.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- SU 1400589 A1, Dzneladze

- WO 2009059927 A

**Non-patent literature cited in the description**

- Tea: Cultivation to Consumption. Chapman & Hall, 1992, 483-485